# EUROPEAN PATENT APPLICATION

(11) **EP 4 258 303 A1**
(43) Date of publication of application: **11.10.2023**
(21) Application number: 21901941.1
(22) Date of filing: 06.05.2021
(51) Int. Cl.: H01F 27/30, H01F 27/32

(54) **TRANSFORMER**

(30) Priority: 07.12.2020 CN 202011438258
(71) Applicant: Sungrow Power Supply Co., Ltd., Hefei, Anhui 230088 (CN)
(72) Inventor: CAI, Guoqing, Hefei, Anhui 230088 (CN); ZHUANG, Jiacai, Hefei, Anhui 230088 (CN); XU, Jun, Hefei, Anhui 230088 (CN); LIU, Wei, Hefei, Anhui 230088 (CN)
(74) Representative: Zacco Norway AS
(86) International application number: PCT/CN2021/091835
(87) International publication number: WO 2022/121226

(57) **Abstract**

The present invention provides a transformer, which is applied to the technical field of power transmission and distribution, the transformer comprising an iron core, body windings, and a semi-conductive layer, the body windings being sleeved on a core post of the iron core, and the semi-conductive layer being correspondingly provided with the body windings. Auxiliary circuits are connected to the body windings, the auxiliary circuits and preset positions of the body windings have equal potentials, and an equipotential connection point of the semi-conductive layer is provided by the auxiliary circuits. After the semi-conductive layer is connected to the auxiliary circuits, the effect of balancing the electric field distribution of a winding can be achieved. In the transformer provided in the present invention, an equipotential connection point having an equal potential with the preset positions of the body windings of the transformer is provided by means of the auxiliary circuits, and the semi-conductive layer is directly connected to the equipotential connection point, thereby achieving set effects of the semi-conductive layer, that is, improving the electric field distribution of windings, and improving the high-voltage insulation performance of the transformer without damaging the insulation between litz wire strands.

## Description

This application claims priority to Chinese Patent Application No. 202011438258.1, titled "TRANSFORMER", filed on December 7, 2020 with the China National Intellectual Property Administration, which is incorporated herein by reference in its entirety.

### FIELD

The present disclosure relates to the technical field of power transmission and distribution, and in particular, to a transformer.

### BACKGROUND

In practical applications, not only a high-frequency characteristic of a high-frequency, high-voltage and high-power transformer, but also a high-voltage characteristic of such transformer are required to be focused on. Specifically, in view of the high-frequency characteristic of the high-frequency, high-voltage and high-power transformer, in order to prevent high-frequency eddy current losses caused by skin effect and proximity effect, Litz wire is often used to wind a winding of the transformer. In view of the high-voltage characteristic of the high-frequency, high-voltage and high-power transformer, it is usually necessary to use a semi-conductive layer to improve distribution of an electric field of the winding, to prevent a local electric field intensity of the transformer from being too high.

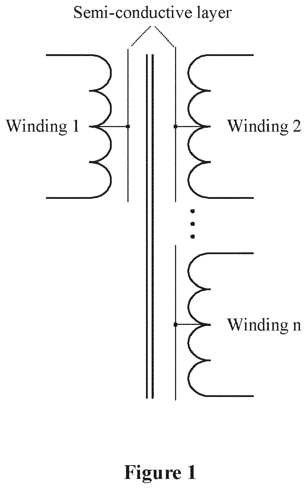

Reference is made to Figure 1, which shows an implementation method of providing a semi-conductive layer in a high-voltage power frequency transformer in the conventional technology. In most cases, one semi-conductive layer corresponds to one winding, and the semi-conductive layer is usually directly connected to a specified position of a corresponding winding in an equipotential manner.

However, it is difficult to adopt the implementation method shown in Figure 1 for the high-frequency, high-voltage and high-power transformer. The reasons are as follows: in a case that the winding of the high-frequency, high-voltage and high-power transformer is wound with Litz wire, due to the fact that Litz wire includes multiple strands of wires which are insulated from each other, it is difficult to lead out a connection point to be connected to the semi-conductive layer without damaging the insulation between the strands of Litz wire. If the insulation between the strands of Litz wire is damaged, it will lead to a heating problem caused by the high-frequency eddy current losses at a position where the insulation is damaged.

### SUMMARY

A transformer is provided according to the present disclosure. By providing a preset connection point with an equal potential to a preset position of a body winding of a transformer through an auxiliary circuit, a semi-conductive layer is directly connected to the preset connection point, thereby achieving the following predetermined function of the semi-conductive layer while avoiding damage to the insulation between strands of Litz wire: improving the distribution of an electric field of the winding and preventing excessive local electric field intensity of the transformer.

To achieve the above objectives, technical solutions according to the present disclosure are provided as follows.

In a first aspect, a transformer is provided according to the present disclosure. The transformer includes: an iron core, a body winding, and a semi-conductive layer, where
the body winding is sleeved on a core column of the iron core;
the semi-conductive layer is correspondingly arranged with the body winding;
an equipotential connection point of the semi-conductive layer is provided by an auxiliary circuit; and
the auxiliary circuit is connected to the body winding, and the auxiliary circuit and a preset position of the body winding have an equal potential.

Optionally, the equipotential connection point provided by the auxiliary circuit is a connection point at which a capacitive current of the semi-conductive layer is minimized.

Optionally, the auxiliary circuit includes an auxiliary winding sleeved on the core column.

Optionally, the auxiliary winding and the body winding have a same winding direction and a same number of turns.

Optionally, the auxiliary circuit includes a converter connected to the transformer.

Optionally, a positive bus on a direct current side of the converter serves as the equipotential connection point.

Optionally, a negative bus on a direct current side of the converter serves as the equipotential connection point.

Optionally, a midpoint of a bus on a direct current side of the converter serves as the equipotential connection point.

Optionally, the auxiliary circuit includes a converter and an auxiliary winding, where
the equipotential connection point is provided by a bus on a direct current side of the converter;
each of N semi-conductive layers among the semi-conductive layer of the transformer is connected to a bus on a direct current side of a corresponding converter, wherein N is greater than or equal to 1; and
each of M semi-conductive layers among the semi-conductive layer of the transformer is connected to an equipotential connection point of a corresponding auxiliary winding, wherein M is greater than or equal to 1.

Optionally, the transformer according to any one of embodiments of the first aspect of the present disclosure further includes: a capacitive current suppression circuit, where
the capacitive current suppression circuit is connected in series between the equipotential connection point provided by the auxiliary circuit and the semi-conductive layer.

Optionally, the capacitive current suppression circuit includes any one of a resistor and an inductor.

Optionally, the capacitive current suppression circuit includes a resistor and an inductor connected in series.

In a second aspect, an isolation converter is provided according to the present disclosure. The isolation converter includes: a first converter, a second converter, and the transformer according to any one of embodiments of the first aspect of the present disclosure, where
the first converter is connected to a body winding on a primary side of the transformer; and
the second converter is connected to a body winding on a secondary side of the transformer.

The transformer according to the present disclosure includes an iron core, a body winding, and a semi-conductive layer. The body winding is sleeved on a core column of the iron core. The semi-conductive layer is correspondingly arranged with the body winding. An auxiliary circuit is connected to the body winging, and the auxiliary circuit and a preset position of the body winding have an equal potential. An equipotential connection point of the semi-conductive layer is provided by the auxiliary circuit. After the semi-conductive layer is connected to the auxiliary circuit, the distribution of an electric field of a winding can be balanced. In the transformer according to the present disclosure, by providing the preset connection point with the equal potential to the preset position of the body winding of the transformer through the auxiliary circuit, the semi-conductive layer is directly connected to the preset connection point, thereby achieving the following predetermined function of the semi-conductive layer while avoiding damage to the insulation between strands of Litz wire: improving the distribution of the electric field of the winding and preventing excessive local electric field intensity of the transformer.

### BRIEF DESCRIPTION OF THE DRAWINGS

In order to more clearly illustrate technical solutions in embodiments according to the present disclosure or in the conventional technology, the accompanying drawings to be used in the description of the embodiments or the conventional technology are briefly introduced hereinafter. Apparently, the drawings in the following description are only some of the embodiments according to the present disclosure. For those of ordinary skill in the art, other drawings can also be obtained according to these drawings without creative efforts.
Figure 1 is a schematic structural diagram of a high-voltage power frequency transformer provided with a semi-conductive layer according to the conventional technology;
Figure 2 is a schematic structural diagram of a first transformer according to an embodiment of the present disclosure;
Figure 3 is a schematic structural diagram of a second transformer according to an embodiment of the present disclosure;
Figure 4 is a schematic structural diagram of a third transformer according to an embodiment of the present disclosure;
Figure 5 is a schematic structural diagram of a fourth transformer according to an embodiment of the present disclosure;
Figure 6 is a schematic structural diagram of a fifth transformer according to an embodiment of the present disclosure;
Figure 7 is a schematic structural diagram of a sixth transformer according to an embodiment of the present disclosure;

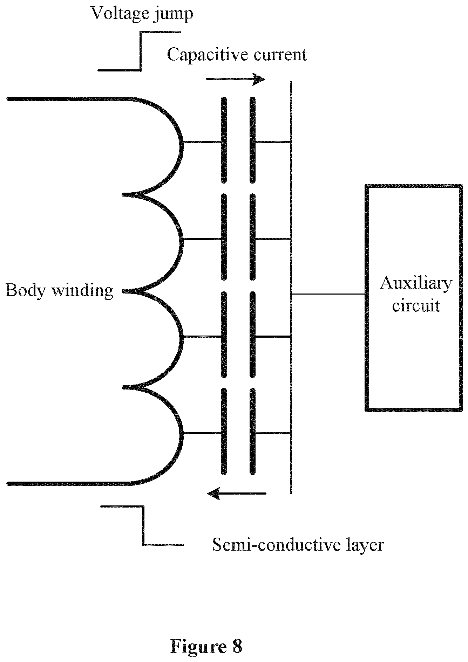

Figure 8 is a schematic diagram illustrating a flow path of a capacitive current of a semi-conductive layer of a transformer according to an embodiment of the present disclosure; and
Figure 9 is a schematic structural diagram of a seventh transformer according to an embodiment of the present disclosure.

### DETAILED DESCRIPTION OF THE EMBODIMENTS

The technical solutions in the embodiments of the present disclosure will be clearly and completely described hereinafter with reference to the drawings in the embodiments according to the present disclosure. Apparently, the described embodiments are only a part of the embodiments of the present disclosure, but not all of the embodiments. Based on the embodiments in the present disclosure, all other embodiments obtained by those of ordinary skill in the art without creative effects fall within the protection scope of the present disclosure.

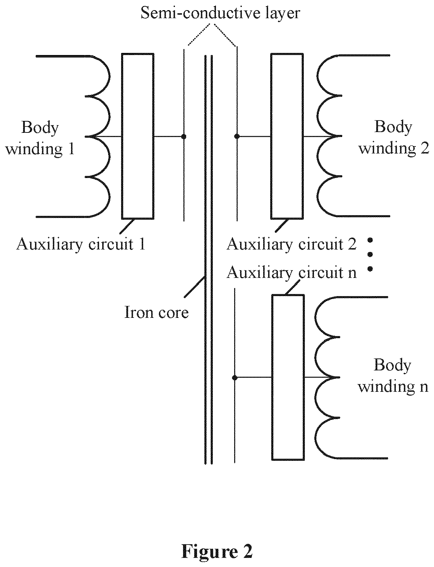

Reference is made to Figure 2. Figure 2 is a schematic structural diagram of a first transformer according to an embodiment of the present disclosure. The transformer according to an embodiment of the present disclosure includes an iron core, a body winding, and a semi-conductive layer.

In combination with a structure of a transformer in practical applications, the transformer according to the embodiment of the present disclosure includes multiple body windings, that is, a body winding 1, a body winding 2, ... , a body winding n shown in Figure 2. Of course, the body winding may be further divided into a primary side winding and a secondary side winding, which may be referred to the conventional technology and will not be described in detail herein. The body winding of the transformer is sleeved on a core column of the iron core. It is conceivable that, for a three-phase transformer, the core column mentioned in the present embodiment includes core columns corresponding to three phases of a-phase, b-phase, and c-phase. Each body winding is also need to be divided into three phases of a-phase, b-phase, and c-phase, and the divided body windings corresponding to the three phases are respectively sleeved on a core column of a corresponding iron core.

Further, the semi-conductive layer is correspondingly arranged with the body winding. It is conceivable that, in most cases, for any phase of the transformer, the primary side winding and the secondary side winding are concentrically sleeved on the core column. Based on this structure, the semi-conductive layer may be arranged on surfaces of the primary side winding and the secondary side winding of the transformer respectively. Of course, the semi-conductive layer may also be arranged at both positions mentioned above according to actual design requirements.

It should be noted that a positional relationship among the body winding, the iron core, and the semi-conductive layer in the schematic structural diagrams given in the drawings of the present disclosure is only for the convenience of explaining the connection between the auxiliary circuit, the body winding and the semi-conductive layer according to the embodiments of the present disclosure and subsequent embodiments, and does not form a limitation on the structure of a product of the transformer. In addition, for a specific component structure of the transformer, installation between components, and the arrangement of the semi-conductive layer may all be implemented with reference to the conventional technology, which is not limited in the present disclosure.

It is important that, in the transformer according to the embodiments of the present disclosure and subsequent embodiments, the equipotential connection point of the semi-conductive layer corresponding to the body winding is provided by the auxiliary circuit. The auxiliary circuit is connected with the body winding, and the auxiliary circuit and a preset position of the body winding have an equal potential.

Of course, a connection point between the auxiliary circuit and the body winding should be chosen as a lead-out connection point of the body winding, such as a lead-out wire of the body winding. Since the lead-out wire of the body winding is specifically used for connecting the body winding to an external circuit, when the auxiliary circuit is connected to the lead-out connection point of the body winding, the insulation of the internal wire turns of the body winding will naturally not be damaged. For the body winding wound with Litz wire, the insulation between strands of Litz wire will also not be damaged.

According to the connection relationship between the auxiliary circuit, the semi-conductive layer, and the body winding mentioned above, it can be seen that the auxiliary circuit is arranged between the semi-conductive layer and the body winding, and the semi-conductive layer is directly connected to the auxiliary circuit. Due to the equal potential between the auxiliary circuit and the preset position of the body winding, from the perspective of effectiveness, the connection between the semi-conductive layer and the auxiliary circuit may be equivalent to the direct connection between the semi-conductive layer and the body winding in the conventional technology, and the effect of the semi-conductive layer on improving the distribution of the electric field is not affected.

Optionally, in practical applications, the equipotential connection point provided by the auxiliary circuit is preferably a connection point that minimizes a capacitive current of the semi-conductive layer, so as to avoid a problem of overheating of the semi-conductive layer and connecting wires connecting the semi-conductive layer and the auxiliary circuit caused by excessive capacitive current as much as possible.

In summary, in the transformer according to the present disclosure, by providing the preset connection point with the equal potential to the preset position of the body winding of the transformer through the auxiliary circuit, the semi-conductive layer is directly connected to the preset connection point, thereby achieving the following predetermined function of the semi-conductive layer while avoiding damage to the insulation between strands of Litz wire: improving the distribution of the electric field of the winding and preventing excessive local electric field intensity of the transformer.

The optional implementation methods of the auxiliary circuit are described hereinafter in conjunction with multiple embodiments and the corresponding accompanying drawings.

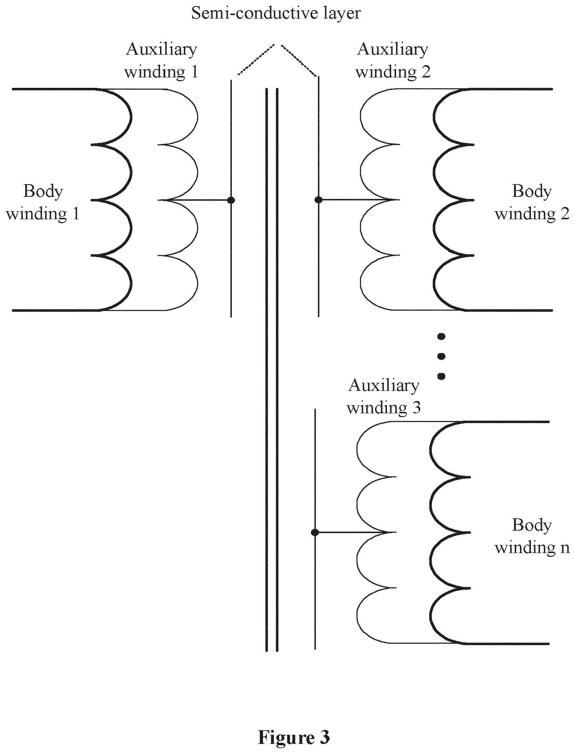

Reference is made to Figure 3. Figure 3 is a schematic structural diagram of a second transformer according to an embodiment of the present disclosure. In the present embodiment, the auxiliary circuit is implemented as an auxiliary winding.

Optionally, as one of the most easily implemented arrangement methods in actual production, the auxiliary winding according to the embodiment is wound together with the body winding. Therefore, in this embodiment, a winding direction of the auxiliary winding is the same as a winding direction of the body winding, and the number of turns of the auxiliary winding is the same as the number of turns of the body winding. The auxiliary winding is also sleeved on the core column of the iron core.

Based on the above connection method, the auxiliary winding is in parallel with the body winding. A voltage value and a voltage drop direction at both ends of the auxiliary winding are identical to those at both ends of the main winding. Furthermore, in a case that the auxiliary winding and the body winding are wound at the same time, the number of turns of the auxiliary winding and the body winding is the same. An induced voltage of each turn of the auxiliary winding is the same as an induced voltage of each turn of the body winding. A potential at each position of the auxiliary winding is also identical to a potential at a corresponding position of the body winding. Therefore, each point of the auxiliary winding may serve as an equipotential connection point of the semi-conductive layer. In practical applications, it can be configured arbitrarily based on the coupling between the semi-conductive layer and the body winding.

It is conceivable that, for the transformer as a whole, multiple body windings are included. Correspondingly, it is necessary to provide an auxiliary winding for each body winding with a semi-conductive layer, correspondingly, and an outlet end of each auxiliary winding is connected to a lead-out connection point of a corresponding body winding. In actual production, the auxiliary winding may be a very thin insulated wire, which is wound together with Litz wire of the body winding, and the process implementation is not difficult.

Of course, although the implementation process is not difficult, in the design process of the transformer, it is still necessary to consider the wire heating problem caused by the shunt of the auxiliary winding, as well as the impact of processing technology, transformer volume, insulation performance, and other aspects, which will not be repeated herein.

Optionally, in practical applications, both the primary and secondary sides of a high-frequency and high-voltage transformer are often connected to converters, and AC-DC (alternating current-direct current) conversion is realized through the converters. There is a direct current potential on a direct current side of the converter. Therefore, as an optional implementation method, the equipotential connection point of the semi-conductive layer may be provided by the converter connected to the transformer.

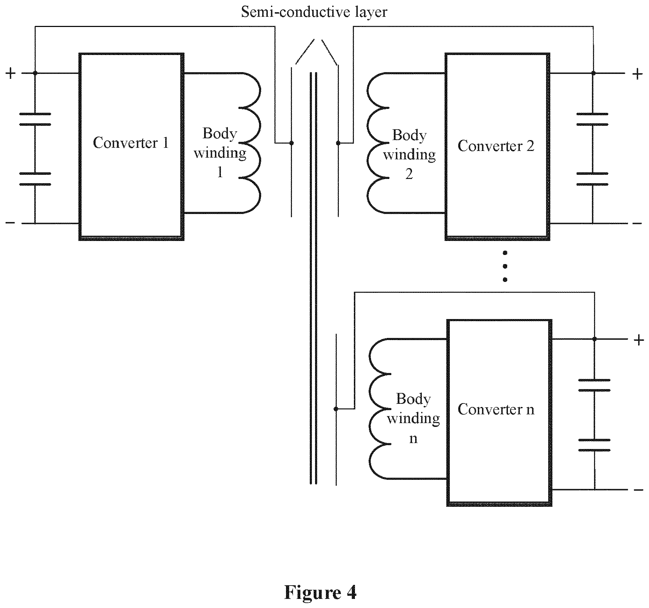

Optionally, reference is made to embodiments shown in Figure 4, Figure 5, and Figure 6, in which an implementation of using the converter as the auxiliary circuit to provide the equipotential connection point is shown.

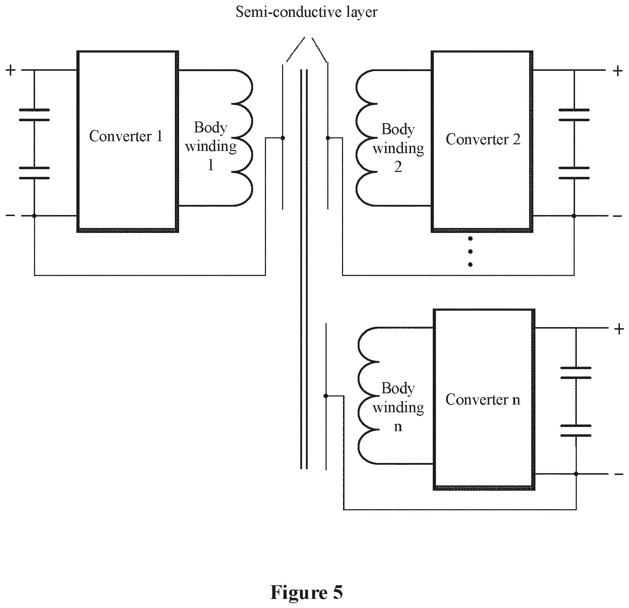

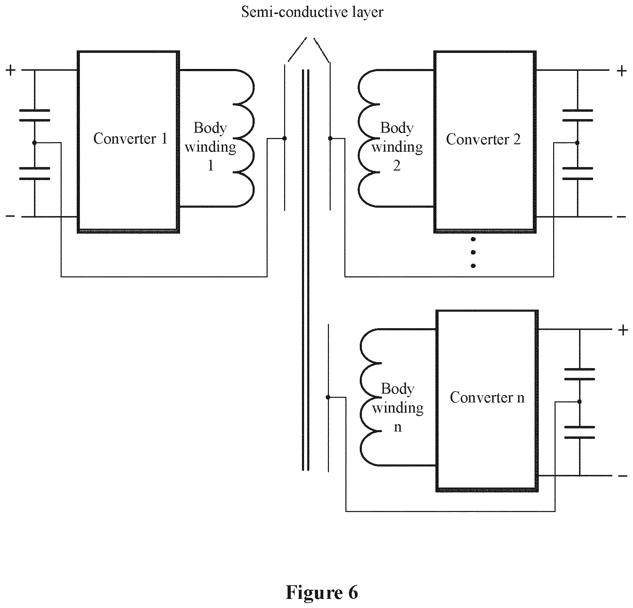

Specifically, in the embodiment shown in Figure 4, a positive bus on a direct current side of the converter serves as the equipotential connection point. Correspondingly, in the embodiment shown in Figure 5, a negative bus on a direct current side of the converter serves as the equipotential connection point. For the converter including the midpoint of a bus, the midpoint of the bus of the converter may also serve as the equipotential connection point. The specific connection relationship is shown in Figure 6.

In the embodiments shown in Figures 4, 5 and 6, the auxiliary circuit is implemented by a converter, without the need for improvement in the structure of the transformer itself, and the wiring is simple, making it easier to implement compared with the embodiment shown in Figure 3. Of course, the drawback is that the embodiments can only be applied in application scenarios with converter installed.

Of course, it is also possible to combine the above two implementation methods of the auxiliary circuit with actual application scenarios, especially in an application scenario where only one side of the transformer is equipped with a converter. By combining the above two implementation methods, the difficulty of generation process of the transformer can be minimized to the greatest extent.

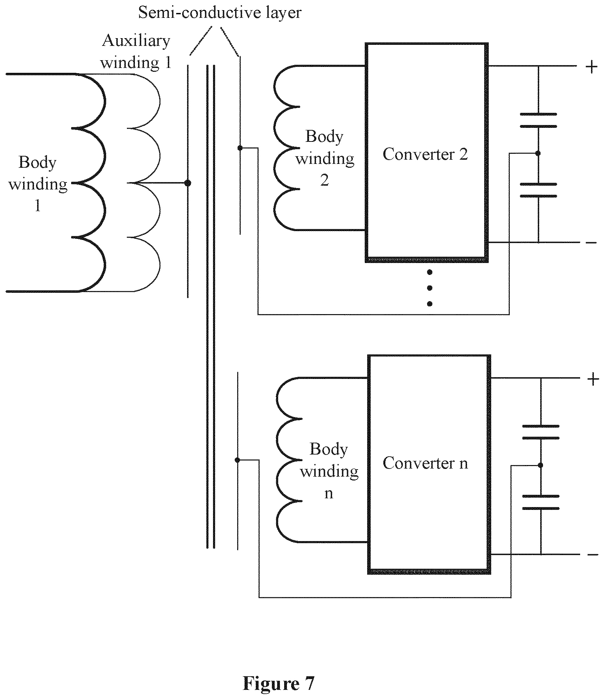

Optionally, reference is made to Figure 7, which is a schematic structural diagram of a sixth transformer according to an embodiment of the present disclosure. In this embodiment, the auxiliary circuit is implemented based on the converter and the auxiliary winding, that is, the bus on the direct current side of the converter and the auxiliary winding respectively provide equipotential connection points.

In practical applications, each of N semi-conductive layers of the transformer is connected to a bus on a direct current side of a corresponding converter, where N is greater than or equal to 1. Each of M semi-conductive layers of the transformer is connected to a equipotential connection point of a corresponding auxiliary winding, where M is greater than or equal to 1. It is conceivable that the sum of N and M is the number of all body windings included in the transformer.

It should be noted that, the specific values of N and M in the above embodiment are selected based on the specific application scenario of the transformer, especially the number of the converters in the application scenario.

Based on the basic principle of the semi-conductive layer, it can be seen that in order to minimize the capacitive current of the semi-conductive layer, the equipotential connection point connecting to the semi-conductive layer is required to be selected based on the coupling between the semi-conductive layer and the body winding.

Taking the symmetrical coupling between the semi conductive layer and the body winding as an example, the flow of capacitive current in the semi-conductive layer will be explained in conjunction with Figure 7.

As shown in Figure 7, voltage jump on both sides of a center point of the body winding of the transformer is opposite. If the semi-conductive layer is connected to the midpoint of the bus, it is equivalent to connecting to the midpoint of the body winding of the transformer. Due to the symmetrical coupling between the semi-conductor layer and both sides of the midpoint of the winding, the capacitive currents flowing through the semi-conductor layer are of the same magnitude but in the opposite directions. In this way, a total capacitive current flowing through an equipotential wiring of the semi-conductive layer is minimized, and the impact on the bus is also minimized.

In any of the above embodiments, it is theoretically possible to make the capacitive current in the semi-conductive layer zero. However, in practical applications, it is difficult to accurately determine an ideal equipotential connection point, especially for the implementation method of the equipotential connection point provided by the converter. The optional positions of the equipotential connection points that the converter can provide are limited, making it more difficult to make the capacitive current zero.

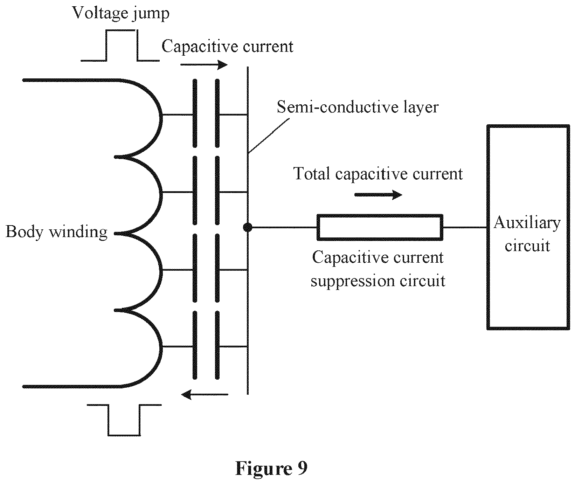

To solve this problem, another transformer is provided according to an embodiment of the present disclosure. Reference is made to Figure 9, which is a schematic structural diagram of a seventh transformer according to an embodiment of the present disclosure. On the basis of any of the above embodiments, the transformer according to the present embodiment further includes: a capacitive current suppression circuit. Specifically, the capacitive current suppression circuit is connected in series between the equipotential connection point provided by the auxiliary circuit and the semi-conductive layer. The specific number of capacitive current suppression circuits should also be determined be considering the magnitude of the capacitive current in the corresponding semi-conductive layer of each body winding of the transformer. Of course, if the production cost allows, a capacitive current suppression circuit may be provided for each semi-conductive layer.

In the transformer according to the present embodiment, the capacitive current suppression circuit is arranged between the semi-conductive layer and the auxiliary circuit. By limiting the magnitude of the capacitive current through the capacitive current suppression circuit, the heating problem caused by excessive capacitive current in the semi-conductive layer can be avoided, and the impact on the equipotential connection point connected to the semi-conductive layer can be reduced.

Optionally, the capacitive current suppression circuit may be implemented by any one of resistor and inductor. For a capacitive current suppression circuit implemented solely through an inductor, the impedance to high-frequency signals is relatively large, which can effectively suppress high-frequency capacitive currents. For low-frequency signals, the impedance is relatively low, and the inductance voltage is small, which can ensure that the semi-conductive layer provides an effective equipotential.

Of course, the capacitive current suppression circuit may also be implemented by a resistor and an inductor connected in series.

Optionally, an isolation converter is further provided according to the present disclosure. The isolation converter includes: a first converter, a second converter, and the transformer according to any of the foregoing embodiments. The first converter is connected to a body winding on a primary side of the transformer, and the second converter is connected to a body winding on a secondary side of the transformer.

The above embodiments in this specification are described in a progressive manner. Each of the embodiments is mainly focused on describing its differences from other embodiments, and references may be made among these embodiments with respect to the same or similar portions among these embodiments. Since the devices disclosed in the embodiment corresponds to the method disclosed in the embodiment, the description for the device is simple, and reference may be made to the method in the embodiment for the relevant parts.

It is further understood by those skilled in the art that units and algorithm steps described in combination with the disclosed embodiments may be implemented by electronic hardware, computer software or a combination thereof. In order to clearly describe interchangeability of the hardware and the software, the units and the steps of embodiments are generally described above based on functions. Whether these functions are performed in hardware or software depends on the specific application and design constraints for the technical solution. Those skilled in the art can implement the described functions using different methods for each of the specific applications, however, the implementation should not be considered to go beyond the scope of the present disclosure.

The steps of the method or the algorithm described in conjunction with the embodiments disclosed herein can be implemented directly by hardware, a software module executed by the processor, or a combination thereof. The software module may be stored in a Random Access Memory (RAM), a memory, a Read-Only Memory (ROM), an electrical programmable ROM, an electrically erasable programmable ROM, a register, a hardware disk, a removable magnetic disk, a CD-ROM, or any other forms of storage medium well known in the art.

The above description of the disclosed embodiments enables those skilled in the art to implement or use the present disclosure. It is apparent for those skilled in the art to make many modifications to these embodiments. The general principle defined herein may be applied to other embodiments without departing from the spirit or scope of the present disclosure. Therefore, the present disclosure should not be limited to the embodiments disclosed herein, but has the widest scope in accordance to the principle and the novel features disclosed herein.

## Claims

1. A transformer, comprising: an iron core, a body winding, and a semi-conductive layer, wherein
the body winding is sleeved on a core column of the iron core;
the semi-conductive layer is correspondingly arranged with the body winding;
an equipotential connection point of the semi-conductive layer is provided by an auxiliary circuit; and
the auxiliary circuit is connected to the body winding, and the auxiliary circuit and a preset position of the body winding have an equal potential.

2. The transformer according to claim 1, wherein the equipotential connection point provided by the auxiliary circuit is a connection point at which a capacitive current of the semi-conductive layer is minimized.

3. The transformer according to claim 1, wherein the auxiliary circuit comprises an auxiliary winding sleeved on the core column.

4. The transformer according to claim 3, wherein the auxiliary winding and the body winding have a same winding direction and a same number of turns.

5. The transformer according to claim 1, wherein the auxiliary circuit comprises a converter connected to the transformer.

6. The transformer according to claim 5, wherein a positive bus on a direct current side of the converter serves as the equipotential connection point.

7. The transformer according to claim 5, wherein a negative bus on a direct current side of the converter serves as the equipotential connection point.

8. The transformer according to claim 5, wherein a midpoint of a bus on a direct current side of the converter serves as the equipotential connection point.

9. The transformer according to claim 1, wherein the auxiliary circuit comprises a converter and an auxiliary winding, wherein
the equipotential connection point is provided by a bus on a direct current side of the converter;
each of N semi-conductive layers among the semi-conductive layer of the transformer is connected to a bus on a direct current side of a corresponding converter, wherein N is greater than or equal to 1; and
each of M semi-conductive layers among the semi-conductive layer of the transformer is connected to an equipotential connection point of a corresponding auxiliary winding, wherein M is greater than or equal to 1.

10. The transformer according to any one of claims 1 to 9, further comprising: a capacitive current suppression circuit, wherein
the capacitive current suppression circuit is connected in series between the equipotential connection point provided by the auxiliary circuit and the semi-conductive layer.

11. The transformer according to claim 10, wherein the capacitive current suppression circuit comprises any one of a resistor and an inductor.

12. The transformer according to claim 10, wherein the capacitive current suppression circuit comprises a resistor and an inductor connected in series.

13. An isolation converter, comprising: a first converter, a second converter, and the transformer according to any one of claims 1 to 12, wherein
the first converter is connected to a body winding on a primary side of the transformer, and the second converter is connected to a body winding on a secondary side of the transformer.
